(19) Europäisches Patentamt
European Patent Office
Office européen des brevets

(11) Veröffentlichungsnummer: **0 013 774**
**B1**

# (12) EUROPÄISCHE PATENTSCHRIFT

(45) Veröffentlichungstag der Patentschrift: **12.05.82**

(51) Int. Cl.³: **C 05 G 1/00,** C 05 C 1/00, C 05 B 3/00

(21) Anmeldenummer: **79200704.9**

(22) Anmeldetag: **30.11.79**

## (54) Verfahren zur Herstellung von gegen Schwelzersetzung auch bei erhöhten Temperaturen beständigen ammonnitrat-, chlorid- und dicalciumphosphathaltigen NPK-Düngemitteln.

(30) Priorität: **06.12.78 DE 2852643**

(43) Veröffentlichungstag der Anmeldung: **06.08.80 Patentblatt 80/16**

(45) Bekanntmachung des Hinweises auf die Patenterteilung: **12.05.82 Patentblatt 82/19**

(84) Benannte Vertragsstaaten: **BE CH DE FR GB IT LU NL SE**

(56) Entgegenhaltungen:
**DE-B-1 039 542**
**FR-A-1 388 684**
**FR-A-1 426 120**
**FR-A-2 132 834**
**US-A-2 086 912**
**US-A-2 657 977**
**US-A-2 965 468**

(73) Patentinhaber: **CHEMISCHE WERKE HÜLS AG, Postfach 1320, D-4370 Marl 1 (DE)**

(72) Erfinder: **Hahn, Heinrich, Dr., Lüdemannsweg 5, D-4660 Gelsenkirchen-Buer (DE)**
Erfinder: **Kurandt, Hans-Friedrich, Dr., Wilhelm-Reinecke-Strasse 66, D-2120 Lüneburg (DE)**

(74) Vertreter: **Stell, Hanna, Dipl.-Chem. et al, RSP PATENTE-PB 40 Holsterhauser Strasse 160 Postfach 2840, D-4690 Herne 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 013 774 B1

# Verfahren zur Herstellung von gegen Schwelzersetzung auch bei erhöhten Temperaturen beständigen ammonnitrat-, chlorid- und dicalciumphosphathaltigen NPK-Düngemitteln

Die Erfindung betrifft ein Verfahren zur Verhinderung der Schwelzersetzung von ammonnitrathaltigen Mehrnährstoffdüngemitteln bei höheren Temperaturen durch Nachbehandlung des granulierten, getrockneten und klassierten Düngers mit Ammoniak.

Ammonnitrathaltige Mehrnährstoffdüngemittel verlangen bei der Herstellung, Lagerung und Handhabung besondere Sicherheitsvorkehrungen. Sie sind im Gegensatz zu reinem Ammonnitrat — infolge ihres Gehaltes an Inertstoffen — zwar nicht explosionsfähig, sind jedoch in bestimmten Zusammensetzungen bei Einwirkung von äußeren Wärmequellen zu exothermen Zersetzungen fähig. So genügt die Einwirkung einer Wärmequelle von über 200°C, um einen solchen Dünger zur Entzündung zu bringen. Eine derartige Entzündung setzt sich dann in Form eines Schwelbrandes auch ohne äußere Zufuhr von Sauerstoff fort, da das Düngemittel den zur Verbrennung nötigen Sauerstoff in Form von Nitrat selbst enthält.

Aufgrund von Schwelbränden, die sich in Düngemittellagerhallen und Schiffen ereignet haben, ist bekannt, daß Mehrnährstoffdünger praktisch nur dann zur Schwelzersetzung neigen, wenn sie neben Ammonnitrat auch Chloride enthalten. Das ist bei den meisten NPK-Düngemitteln, die bekanntlich Kaliumchlorid als Kalirohstoff enthalten, in der Regel der Fall.

Von der Schwelzersetzung gefährdet sind vor allem solche Düngemittel, die folgende Bestandteile enthalten:

Ammonnitrat,
(Kalium-)chlorid und
Dicalciumphosphat.

Außerdem darf der Inertanteil nicht zu hoch sein.

Diese Düngemittel können außerdem Ammonphosphat, Calciumsulfat, Calciumnitrat, Spurenelemente und sonstige Zusätze sowie gegebenenfalls die Umsetzungsprodukte der Hauptkomponenten, z. B. Kaliumnitrat oder Ammonchlorid, enthalten. Bei Düngemitteln mit ausschließlich wasserlöslichem $P_2O_5$, z. B. auch solche aus Superphosphaten oder Doppelsuperphosphaten hergestellte, mit $Ca(H_2PO_4)_2$ als Hauptbestandteil, wurden Schwelzersetzungserscheinungen im allgemeinen nicht beobachtet. Dagegen sind bei Gemischen, die kein $P_2O_5$ enthalten, z. B. solche aus Ammonnitrat, Kaliumchlorid und Ammonsulfat, Schwelzersetzungserscheinungen bekannt.

Relativ häufig werden Schwelzersetzungen (auf englisch »cigar burning«) bei Düngemitteln vom Typ 15/15/15 und 13/13/21 beobachtet. Von Düngemitteln vom Typ 10/10/15 und den noch ballastreicheren (und entsprechend nährstoffärmeren) Düngemitteln sind solche Erscheinungen nicht bekannt.

Zur Verhinderung der Schwelzersetzung wurden zahlreiche Zusätze vorgeschlagen, z. B. Erdalkali-Sulfate oder -Carbonate oder Alkali-Borate oder (Poly)-phosphate.

In der DE-B-2 117 355 wird die Verhinderung der Schwelzersetzung dadurch erreicht, daß dem Dünger während der Produktion 3—25% Ammoniumsulfat zugesetzt wird und gleichzeitig zur Aufrechterhaltung des jeweils vorgegebenen Nährstoffverhältnisses der Anteil der wasserlöslichen Phosphorsäure auf 30—70% des Gesamtphosphats erhöht wird.

Diese Maßnahme reicht aus, um die Schwelzersetzung von Dünger bei Raumtemperaturen von 20°C bis 30°C zu verhindern, selbst wenn er an einer Stelle auf die Entzündungstemperaturen von ca. 200°C gebracht wird.

In der letzten Zeit sind Fälle von Düngemittelschwelbränden bekanntgeworden, bei denen beispielsweise eine Scheune in Brand geriet und anschließend der darin gelagerte Volldünger infolge der Hitzeeinwirkung des Brandes zur Entzündung gelangte. In solchen Fällen wird der Dünger durch die Hitzeeinwirkung zunächst auf höhere Temperatur gebracht und kommt dann schließlich, nach Überschreiten der Zündtemperatur, zum Verschwelen.

Die üblichen Schweltests, die nur mit Dünger von Normaltemperatur (20°C) durchgeführt werden, gelten bei einem derartigen Umstand nur bedingt. Von uns durchgeführte Versuche haben gezeigt, daß bei Normaltemperatur unbrennbare Dünger bei höheren Temperaturen, z. B. nach Vorerwärmen auf 60°C, vor der Entzündung sehr wohl verschwelen können. Dieser Effekt war zu erwarten, da die Wärmetönung beim Verschwelen in einem solchen Fall nicht zum Aufwärmen des Düngers verbraucht wird, sondern direkt zur Beschleunigung dieser Zersetzungsreaktion beiträgt.

Es wurde nun gefunden, daß man bei Düngemittelgemischen, denen bereits Zusätze zur Verhinderung der Schwelzersetzung einverleibt waren, erreichen kann, daß sie bei höheren Temperaturen gegen Schwelzersetzung immun bleiben, wenn man das granulierte, getrocknete und klassierte Produkt mit Ammoniak nachbehandelt.

Das gilt insbesondere für Düngemittel, die nach der DE-B-2 117 355 gegen Schwelzersetzung bei Zimmertemperatur geschützt worden sind.

Bereits bekannt ist ein Verfahren, bei dem Ammonnitrat und Kalksteinmehl nach einer Vermischung in einer Granulierschnecke unter Zusatz von Ammonnitratlösung in Ammoniak und/oder durch

Einführung von flüssigem oder gasförmigem Ammoniak in einer gasdichten Granulierschnecke gekrümelt und anschließend in einer Drehtrommel mit durchgesaugter Luft von überschüssigem Ammoniak befreit wird.

Von diesem Verfahren unterscheidet sich das erfindungsgemäße dadurch, daß nicht KAS, sondern NP- bzw. NPK-Dünger hergestellt und außerdem bereits klassierte Ware mit Ammoniak nachbehandelt wird.

Bei KAS erfolgt die Ammoniakbehandlung zur Zurückdrängung der Calciumnitrat-Bildung, die nach der Gleichung

$$2\,NH_4NO_3 + CaCO_3 \rightleftarrows Ca(NO_3)_2 + 2\,NH_3 + CO_2 + H_2O$$

stattfinden würde. Durch den $NH_3$-Zusatz wird das Gleichgewicht, das sonst bei Maischetemperaturen von 135°C leicht zu Calciumnitratgehalten von mehr als 1% führt, zur Seite des $NH_4NO_3/CaCO_3$ verschoben.

In den NPK-Düngemitteln liegt $Ca(NO_3)_2$ im allgemeinen nicht vor, das Calcium ist — besonders bei den hochprozentigen Düngemitteln — entweder durch entsprechende Vorbehandlung zumindest weitgehend als $Ca(NO_3)_2$ (Ausfrieren) oder als $CaSO_4$ (Zugabe von Sulfaten oder Schwefelsäure und anschließendes Abfiltrieren) entfernt worden oder es liegt ausschließlich als $CaHPO_4$ oder in ähnlicher Form vor.

Bei der Nachammonisation des erfindungsgemäß zu behandelnden Düngers handelt es sich auch nicht um die bekannte, im Herstellungsprozeß des Düngers z. B. in einer Granuliertrommel vor der Trocknung des Produktes durchgeführte Ammoniakzugabe, sondern stets um eine Ammoniakbehandlung von bereits granuliertem, getrocknetem und abgesiebtem Material, einem Dünger also, der in dieser Form normalerweise Fertigprodukt ist und der so in die Lagerhalle gebracht wird oder auch direkt zum Versand gelangt.

Der getrocknete und abgesiebte Dünger wird vor der Nachammonisierung zweckmäßigerweise gekühlt, möglichst auf Temperaturen unter 30°C, mindestens aber unter 50°C.

Das Ammoniak wird gasförmig zugeführt. Seine Temperatur sollte die des Düngemittels möglichst nicht überschreiten. Die Anwendung von flüssigem Ammoniak ist zwar möglich, jedoch ergeben sich dabei Dosierungs- und Verteilungsprobleme, so daß man gewöhnlich den Einsatz von gasförmigem Ammoniak vorziehen wird.

Die Ammonisierung erfolgt gewöhnlich bei leichtem Überdruck. Im allgemeinen wird man jedoch Drücke von mehr als 5 bar vermeiden. Selbstverständlich kann man den Ammoniakstrom auch bei leichtem Unterdruck durch den verwendeten Ammonisierbehälter hindurchsaugen.

Zur Nachammonisierung wird soviel Ammoniak zugesetzt, daß die Proben, die hinter dem Ammonisator entnommen werden (10 g, aufgefüllt mit dest. Wasser auf 100 ml), pH-Werte zwischen 7,0 und 8,5, vorzugsweise zwischen 7,5 und 8,0, aufweisen.

Die Ammonisation des trockenen, granulierten Produktes wird z. B. in einem Abzugsbunker durchgeführt, in den kontinuierlich Dünger ein- und abgeführt wird. In dem mit Dünger gefüllten Bunker erfolgt etwas oberhalb des Austrags die Ammoniakzugabe. Ammoniakverluste entstehen bei der oben beschriebenen Arbeitsweise nicht, da das eingebrachte Ammoniak von dem trockenen granulierten Material vollständig aufgenommen wird.

Die Ammoniakaufnahme ist größer als in den üblicherweise bekannten Fällen, bei denen z. B. eine Ammoniakzugabe in einer Granuliertrommel vor einer Trocknung erfolgt, da bei der Trocknung eines solch hochammonisierten Produktes ein Teil des eingebrachten Ammoniaks entweicht und damit die erfindungsgemäße Verhinderung der Schwelzersetzung nicht mehr erfolgt. Nach dem erfindungsgemäßen Verfahren der Nachammonisierung des fertigen Produktes nach der Trocknung traten keine Ammoniakverluste mehr auf.

Das nachammonisierte Produkt erwärmt sich während der Ammoniakzugabe und wird zweckmäßigerweise danach vor der Konfektionierung mit Antibackmitteln bzw. vor einer eventuellen Zwischenspeicherung noch einmal unter 30°C abgekühlt.

Natürlich können zur Ammonisierung auch andere geeignete Apparate statt des Abzugsbunkers verwendet werden, z. B. Granulierschnecken, Granuliertrommeln, Schwebekühler oder Fluidisationsapparate.

Die in der Tabelle zusammengestellten Ergebnisse einiger Proben von 15+15+15-Dünger erläutern die Wirkung des erfindungsgemäßen Verfahrens.

Ergebnisse des Schweltests bei 15 + 15 + 15 mit und ohne Nachammonisation

| Beispiel Nr. | Ammonsulfat-zusatz | $P_2O_5$-wasserlöslich in % vom Ges.-$P_2O_5$ | Temperatur des Düngers vor dem Entzünden, °C | Brennstrecke, cm | Brenngeschwindigkeit cm/h |
|---|---|---|---|---|---|
| A) Schweltest ohne Nachammonisation | | | | | |
| 1 | – | 30 | 20 | 50 | 11 |
| 2 | – | 30 | 60 | 50 | 24 |
| 3 | 15,0 | 60 | 20 | 0 | 0 |
| 4 | 15,0 | 60 | 60 | 50 | 8 |
| B) Schweltest mit Nachammonisation | | | | | |
| 5 | – | 30 | 20 | 50 | 7 |
| 6 | – | 30 | 60 | 50 | 12 |
| 7 | 15,0 | 60 | 20 | 0 | 0 |
| 8 | 15,0 | 60 | 60 | 0 | 0 |

Eine Nachammonisation von normal hergestellten Volldüngern führt zwar zu einer Verminderung der Zersetzungsgeschwindigkeit, verhindert aber die Zersetzung selbst nicht (Probe Nr. 5 und 6 gegenüber Probe 1 und 2).

Die nach der DE-AS 2 111 356 hergestellten Produkte sind der Schwelzersetzung bei Zimmertemperatur (Probe 3) nicht unterworfen, bei Vorerwärmung auf 60° C (Probe 4) sind sie jedoch nicht mehr dagegen sicher.

Werden diese Proben jedoch vor diesem Test mit $NH_3$ vorbehandelt, sind sie sowohl bei Zimmertemperatur (Probe 7) als auch nach Vorerwärmung auf 60° C (Probe 8) gegen Schwelzersetzung beständig.

**Patentansprüche**

1. Verfahren zur Herstellung von gegen Schwelzersetzung auch bei erhöhten Temperaturen beständigen ammonnitrat-, chlorid- und calciumphosphathaltigen NPK-Düngemitteln, denen man zur Verhinderung der bei Zimmertemperatur auftretenden Schwelzersetzung Ammonsulfat in Mengen von 3–25 Gew.-% zugesetzt und die gewünschten Nährstoffgehalte dadurch beibehalten hat, daß man den Anteil an Mono- bzw. Diammonphosphat-$P_2O_5$ auf 30–70% des gesamten $P_2O_5$ erhöht hat, dadurch gekennzeichnet, daß man das granulierte, getrocknete und klassierte Produkt mit Ammoniak nachbehandelt.

2. Verfahren nach Anspruch 1, dadurch gekennzeichnet, daß man den Dünger vor der Nachammonisierung kühlt.

3. Verfahren nach den Ansprüchen 1 und 2, dadurch gekennzeichnet, daß man die Nachammonisierung in einem mit Mischwerkzeugen und mit kontinuierlicher Zu- und Abführung des Düngers versehenen Bunker bzw. einer entsprechenden Trommel durchführt.

4. Verfahren nach einem der Ansprüche 1–3, dadurch gekennzeichnet, daß man die Nachammonisierung in einem Schwebekühler durchführt.

**Claims**

1. Process for the production of NPK-fertilizers containing ammonium nitrate, chloride and calcium phosphate, which are smoulder-proof, even at elevated temperatures, to which ammonium sulfate has been added in amounts of 3–25% by weight, in order to prevent smouldering decomposition at room temperature, the desired nutrient content has been maintained by increasing the percentage of $P_2O_5$ present as mono- and diammonium phosphate respectively to 30–70% of the entire $P_2O_5$ content,

characterised by post-treating the granulated, dried and screened product with ammonia.

2. Process according to Claim 1, wherein the fertilizer is cooled prior to post-ammoniation.

3. Process according to Claims 1 and 2, wherein the ammoniation is performed within a hopper or a corresponding drum provided with mixing devices and means for continuous introduction and removal of the fertilizer.

4. Process according to one of Claims 1 to 3, wherein the subsequent ammoniation is performed within a suspension cooler.

**Revendications**

1. Procédé de fabrication d'engrais NPK contenant du nitrate d'ammonium, du chlorure et du phosphate de calcium, qui sont stables à la décomposition par combustion lente même aux températures élevées, auxquels pour l'inhibition de la décomposition par combustion lente à la température ordinaire on a ajouté du sulfate d'ammonium en des quantités de 3 à 25% en poids et dans lesquels on a maintenu les teneurs désirées en éléments nutritifs en augmentant la fraction du $P_2O_5$ sous la forme de phosphate mono- ou diammonique à 30—70% du $P_2O_5$ total, caractérisé en ce qu'on exécute un post-traitement à l'ammoniac du produit granulé, séché et classé.

2. Procédé selon la revendication 1, caractérisé en ce qu'on refroidit l'engrais avant la post-ammonisation.

3. Procédé selon les revendications 1 et 2, caractérisé en ce qu'on exécute la post-ammonisation dans un bunker muni d'appareils mélangeurs et d'une admission et soustraction continues de l'engrais ou dans un tambour correspondant.

4. Procédé selon les revendications 1 à 3, caractérisé en ce qu'on exécute la post-ammonisation dans un refroidisseur en suspension.